# EUROPEAN PATENT APPLICATION

(11) **EP 3 367 286 A1**
(43) Date of publication of application: **29.08.2018**
(21) Application number: 18158207.3
(22) Date of filing: 22.02.2018
(51) Int. Cl.: G06F 21/45, G06F 21/88

(54) **METHODS, APPARATUSES, COMPUTER PROGRAM AND RECORDING MEDIUM FOR PROTECTING INFORMATION**

(30) Priority: 22.02.2017 CN 201710097540
(71) Applicant: Beijing Xiaomi Mobile Software Co., Ltd., Beijing 100085 (CN)
(72) Inventor: WANG, Ke, Beijing 100085 (CN)
(74) Representative: Hughes, Andrea Michelle

(57) **Abstract**

Methods apparatuses, a computer program and a recording medium are provided for protecting information. The method may include: acquiring an unlocking input for unlocking a terminal; determining whether the unlocking input matches with first preset information; when the unlocking input matches with the first preset information, setting stored information associated with the first preset information in the terminal to be in an invisible mode and unlocking the terminal. The present invention effectively avoids the case where when a user is compelled to unlock a terminal, the compeller maliciously uses the terminal such that the user's privacy leaks or the user's property is lost, thereby improving security of the user's information.

## Description

### TECHNICAL FIELD

The present invention is related to the technical field of information security, and more particularly, to methods, apparatuses, a computer program and a recording medium for protecting information.

### BACKGROUND

In the current field of technology, the functions of cell phones are becoming more diverse. Users can use their cell phones for shopping, payment, recording of important information and the like. As a result, more and more personal information of the user is stored in the cell phone. If the cell phone is stolen, it is highly possible that the user's privacy may leak.

To improve the privacy and security of the cell phone, many cell phone manufacturers set a password unlocking function for the cell phone. Only when the correct password is input, can the cell phone be unlocked normally and can the operation interface be started. In this case, if the cell phone is stolen, the thief cannot unlock the cell phone as he/she does not know the correct password. Therefore, the user's privacy information is protected.

### SUMMARY

To solve problems in the art, the embodiments of the present invention provide methods, apparatuses, a computer program and a recording medium for protecting information. The technical solutions are as below.

According to a first aspect of the present invention, there is provided a method for protecting information. The method comprises: acquiring an unlocking input for unlocking a terminal; determining whether the unlocking input matches with first preset information; when the unlocking input matches with the first preset information, setting stored information associated with the first preset information in the terminal to be in an invisible mode and unlocking the terminal.

The technical solutions provided by the embodiment of the present invention may produce the following advantageous effect. If the terminal determines that the unlocking information input by a user matches with first preset information, stored information associated with the first preset information may be set to be in an invisible mode. The present invention effectively avoids the case where when the user is compelled to unlock a terminal, the compeller maliciously uses the terminal such that the user's privacy leaks or the user's property is lost, thereby improving security of the user's information.

In an embodiment, setting the stored information associated with the first preset information in the terminal to be in the invisible mode comprises: deleting the stored information associated with the first preset information in the terminal.

The technical solution provided by the embodiment of the present invention may produce the following advantageous effect. If the terminal determines that the unlocking information input by a user matches with first preset information, stored information associated with the first preset information may be deleted. The present invention effectively avoids the case where when the user is compelled to unlock a terminal, the compeller maliciously uses the terminal such that the user's privacy leaks or the user's property is lost, thereby improving security of the user's information.

In another embodiment, deleting the stored information associated with the first preset information in the terminal comprises: copying the stored information associated with the first preset information to a cloud backup storage; and after copying the stored information to the cloud backup storage, deleting the stored information in the terminal.

The technical solution provided by the embodiment of the present invention may produce the following advantageous effect. To prevent losing the user's important information, the terminal may first copy the stored information to a cloud backup storage before deleting the stored information associated with the first preset information, so that the user can re-download and use the information afterwards, thereby improving the user experience.

In yet another embodiment, the method further comprises: when the unlocking input does not match with the first preset information, determining whether the unlocking input matches with second preset information; when the unlocking input matches with the second preset information, unlocking the terminal.

The technical solution provided by the embodiment of the present invention may produce the following advantageous effect. When the terminal determines that the unlocking input matches with the second preset information, the terminal can normally perform unlocking. In this case, the terminal does not delete the information stored therein, so that the user can normally use the terminal in a secure condition.

In yet another embodiment, determining whether the unlocking input matches with the first preset information comprises: acquiring a type of the unlocking input; determining whether the type of the unlocking input is the same as that of the first preset information; and when the type of the unlocking input is the same as that of the first preset information, determining whether the unlocking input matches with the first preset information.

The technical solution provided by the embodiment of the present invention may produce the following advantageous effect. When the type of the unlocking input is the same as that of the first preset information, and the unlocking input matches with the first preset information, the terminal can set the stored information associated with the first preset information in the terminal to be in an invisible mode. The present invention effectively avoids the case where when a user is compelled to unlock a terminal, the compeller maliciously uses the terminal such that the user's privacy leaks or the user's property is lost, thereby improving security of the user's information. In addition, the double determination logic also improves the determination efficiency and accuracy.

In yet another embodiment, determining whether the unlocking input matches with the second preset information comprises: determining whether a type of the unlocking input is the same as that of the second preset information; and when the type of the unlocking input is the same as that of the second preset information, determining whether the unlocking input matches with the second preset information.

The technical solution provided by the embodiment of the present invention may produce the following advantageous effect. When the terminal determines that the type of the unlocking input is the same as that of the second preset information, and the unlocking input matches with the second preset information, the terminal can normally perform unlocking, so that the user can normally use the terminal in a secure condition. In addition, the double determination logic also improves the determination efficiency and accuracy.

According to a second aspect of the present invention, there is provided an apparatus for protecting information. The apparatus comprises: a first acquiring module configured to acquire an unlocking input for unlocking a terminal; a first determining module configured to determine whether the unlocking input matches with first preset information; and a setting module configured to, when the unlocking input matches with the first preset information, set stored information associated with the first preset information in the terminal to be in an invisible mode and unlock the terminal.

In an embodiment, the setting module comprises: a deleting sub-module configured to delete the stored information associated with the first preset information in the terminal.

In another embodiment, the deleting sub-module comprises: a copying unit configured to copy the stored information associated with the first preset information to a cloud backup storage; and a deleting unit configured to, after copying the stored information to the cloud backup storage, delete the stored information in the terminal.

In yet another embodiment, the apparatus further comprises: a second determining module configured to, when the unlocking input does not match with the first preset information, determine whether the unlocking input matches with second preset information; and an unlocking module configured to, when the unlocking input matches with the second preset information, unlock the terminal.

In yet another embodiment, the first determining module comprises: an acquiring sub-module configured to acquire a type of the unlocking input; a first determining sub-module configured to determine whether the type of the unlocking input is the same as that of the first preset information; and a second determining sub-module configured to, when the type of the unlocking input is the same as that of the first preset information, determine whether the unlocking input matches with the first preset information.

In yet another embodiment, the second determining module comprises: a third determining sub-module configured to, determine whether a type of the unlocking input is the same as that of the second preset information; and a fourth determining sub-module configured to, when the type of the unlocking input is the same as that of the second preset information, determining whether the unlocking input matches with the second preset information.

According to a third aspect of the present invention, there is provided an apparatus for protecting information. The apparatus comprises: a processor, and a memory configured to store instructions executable by the processor, wherein the processor is configured to: acquire an unlocking input for unlocking a terminal; determine whether the unlocking input matches with first preset information; when the unlocking input matches with the first preset information, set stored information associated with the first preset information in the terminal to be in an invisible mode and unlock the terminal.

In one particular embodiment, the blocks of the method for protecting information are determined by computer program instructions.

Consequently, according to a fourth aspect, the invention is also directed to a computer program for executing the blocks of the method for protecting information as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that both the foregoing general description and the following detailed description are only exemplary and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1A is a flow chart of an information protection method according to an aspect of the present invention.
Fig. 1B is a flow chart of an information protection method according to another aspect of the present invention.
Fig. 1C is a flow chart of an information protection method according to yet another aspect of the present invention.
Fig. 1D is a flow chart of an information protection method according to yet another aspect of the present invention.
Fig. 1E is a flow chart of an information protection method according to yet another aspect of the present invention.
Fig. IF is a flow chart of an information protection method according to yet another aspect of the present invention.
Fig. 2 is a flow chart of an information protection method according to yet another aspect of the present invention.
Fig. 3 is a flow chart of an information protection method according to yet another aspect of the present invention.
Fig. 4A is a schematic structural diagram of an information protection apparatus according to an aspect of the present invention.
Fig. 4B is a schematic structural diagram of an information protection apparatus according to another aspect of the present invention.
Fig. 4C is a schematic structural diagram of an information protection apparatus according to yet another aspect of the present invention.
Fig. 4D is a schematic structural diagram of an information protection apparatus according to yet another aspect of the present invention.
Fig. 4E is a schematic structural diagram of an information protection apparatus according to yet another aspect of the present invention.
Fig. 4F is a schematic structural diagram of an information protection apparatus according to yet another aspect of the present invention.
Fig. 5 is a structural block diagram of an information protection apparatus according to an aspect of the present invention.

### DETAILED DESCRIPTION

Descriptions will now be made in detail to exemplary embodiments, examples of which are illustrated in the accompanying drawings. When accompanying figures are mentioned in the following descriptions, the same numbers in different drawings represent the same or similar elements, unless otherwise represented. The implementations set forth in the following description of exemplary embodiments do not represent all implementations consistent with the invention. Instead, they are merely examples of apparatus and methods consistent with aspects related to the invention as recited in the appended claims.

The terminal related to the technical solution provided by the embodiment of the present invention may be a device that can store user information, such as a cell phone, a tablet personal computer, or an intelligent watch, and will not be defined in the embodiment of the present invention. Taking a cell phone as an example, in actual application, in order to meet the requirements of daily life, a user usually installs a plurality of applications in the cell phone, wherein instant messaging applications include chatting records between the user and multiple friends and relate to personal privacy of the user; shopping applications may be bound to multiple bank cards of the user and relate to property security of the user; these applications store important information of many users. If the user is compelled to unlock the cell phone, the compeller can easily obtain the important information of the user, and as a result, the user's privacy leaks or the user's property is lost. In the embodiment of the present invention, if the terminal determines that the unlocking information input by the user matches with first preset information, the terminal may set the stored information associated with the first preset information to be in an invisible mode. That is, when the user is compelled by violence to open the terminal, the stored important information can be set to be in the invisible mode by inputting the unlocking information matched with the first preset information so as to avoid the case where when the user is compelled to unlock a terminal, the compeller maliciously uses the terminal such that the user's privacy leaks or the user's property is lost, thereby improving security of the user's information.

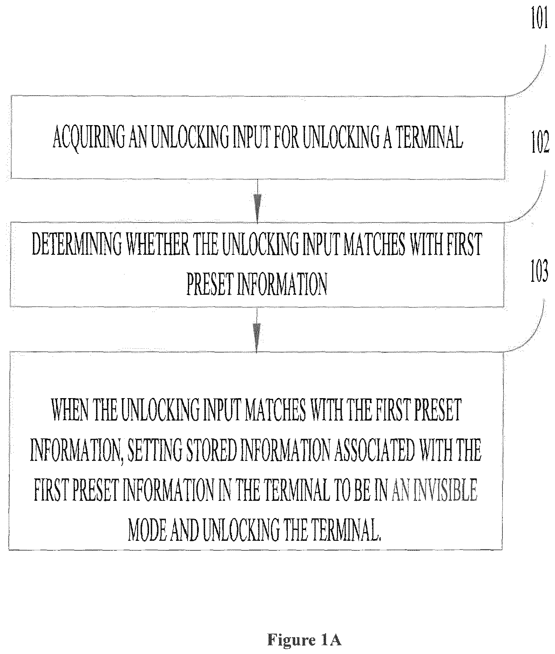

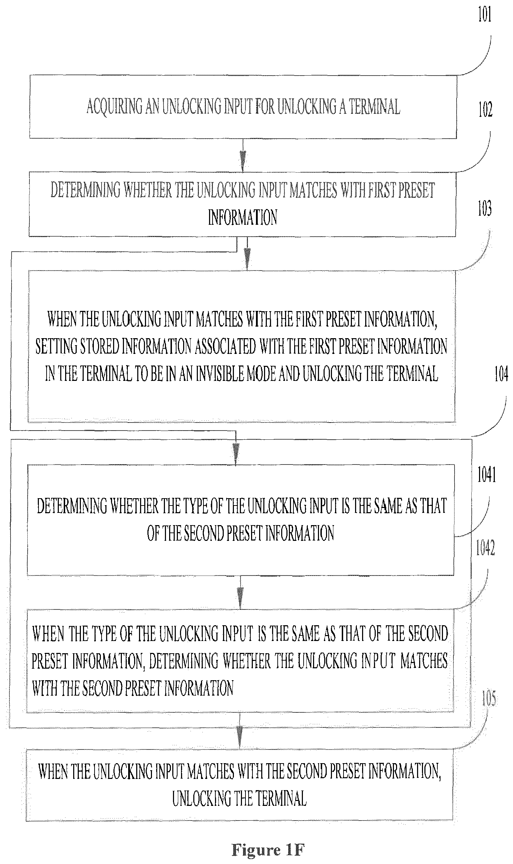

Fig. 1A is a flow chart of an information protection method according to an exemplary embodiment, the information protection method is applied in a terminal which may be a device that can store user information, such as a cell phone, a tablet personal computer, a personal computer or an intelligent watch. As shown in Fig. 1A, the method includes the following blocks 101-103.

In block 101, an unlocking input which is used to unlock the terminal is acquired. The unlocking input may include one or more types of information.

As an example, when the user needs to use a cell phone or is forced to unlock the terminal, the user can click on an electric preset key of the terminal (e.g., a power source key) to enable the terminal to display a lock screen interface. Optionally, the lock screen interface may display an interface entrance used for inputting different types of unlocking information, the user can select proper entrance according to needs and the terminal can display corresponding unlocking interface according to the user's selection. For example, if the user selects the entrance that unlocks the interface with a password, the terminal display an interface where the user can input the password to unlock the interface, the interface displays virtual keys of letters and digits, and the user can input the password by clicking on the virtual keys. When the terminal detects that the user is clicking, the terminal permits to obtain password type unlocking information. If the user selects fingerprint unlocking interface, the terminal displays the interface where the user can input the fingerprint to unlock the interface, and the interface identifies the region with fingerprint identification function, the user can place the finger in the region according to the identification. When the terminal detects that the region with the fingerprint identification function is placed with an object, the terminal acquires the lines of the object as fingerprint type unlocking information.

Additionally or alternatively, in order to ensure security of the password input by the user (e.g., preventing lawbreakers from discovering that the user is using double passwords or multiple passwords), a plurality of screen display triggering keys can be provided, and different lock screen interfaces are triggered by different screen display triggering keys. For example, the screen of the cell phone of the user is in an off state, when the user triggers the first key (e.g., power supply key), the screen displays the first lock screen interface; when the user triggers the second key (e.g., sound control key), the screen displays the second lock screen interface.

In the present embodiment, the unlocking information can be obtained through the lock screen interface and the unlocking information is used to unlock the terminal.

In actual application, the user may input password type unlocking information through an entity keyboard, or unlock by inputting iris features or face features, which will not be defined here in the present invention.

In block 102, it is determined whether the unlocking information matches with the first preset information.

As an example, during initialization, if the user selects to start information protecting function, the terminal may remind the user to set the first preset information, and establish an association relationship between the first preset information and some important stored information which may be password, video, audio and picture of bank card number, bank card, or social network software. Optionally, the terminal may be further provided with second preset information for normal unlocking. The type of the first preset information and the second preset information may be the same or not, and the type of the first preset information or the second preset information may be: digits, letters, fingerprints, iris and the like, which will not be defined by the present invention.

Additionally or alternatively, in an emergency case, the terminal may determine whether the unlocking input matches with third preset information. When the unlocking input matches with the third preset information, the terminal sends an emergency message including current location to a preset emergency contact and unlocking the terminal after deleting the pre-selected important stored information. The terminal may not backup the important information in this emergency case.

As an example, the first preset information is fingerprint type preset information. After the terminal acquires the unlocking information, the terminal further acquires the fingerprint information included in the acquired the unlocking information and then determines whether the similarity between the fingerprint information and the first preset information is greater than or equal to a preset threshold, if the similarity between the fingerprint information and the first preset information is greater than or equal to the preset threshold, the unlocking information matches with the first preset information; if the similarity between the fingerprint information and the first preset information is smaller than the preset threshold, the unlocking information does not match with the first preset information.

Additionally or alternatively, the mode for determining match can be set according to user requirements. For example, for a password composed of digits/letters and the like, the match is determined by the digit/letter password being completely identical with the first preset information. For biological feature type password, the match is determined by seting the biological feature password and the first preset information satisfying the preset range of similarity.

In block 103, when the unlocking information matches with the first preset information, the stored information associated with the first preset information in the terminal is set to be in an invisible mode, and the terminal is unlocked.

In the embodiment, when the terminal determines that the user inputs unlocking information matched with the first preset information, the terminal sets the stored information associated with the first preset information in the terminal into an invisible mode. That is, after the user unlocks the terminal, the terminal will not display the stored information. The method can prevent the important information of the user from being leaked to some extent. For example, if the user is compelled to input the unlocking information, in order to avoid leakage of important information, the user can input unlocking information matched with the first preset information and further set the stored information associated with the first preset information in the local of the terminal into an invisible mode (e.g., setting into information hidden). At this time, even if the user is compelled to unlock the terminal, the compeller cannot view the important information of the user. In another example, parents do not wish some information stored in the cell phone to be seen, or worry about the information being inadvertently deleted. Therefore, when the child uses the cell phone of the parents, the child can use the unlocking information matched with the first preset information to unlock the terminal, and hide the important information so that the child cannot see the information or wrongly delete the information.

It shall be noted that the invisible mode includes, but is not limited to: deleting, adjusting into a hidden mode, adjusting into a private mode (e.g., visible after password is input) and the like

In the technical solution provided by the embodiment of the present invention, when the terminal determines that the unlocking information input by the user matches with the first preset information, the terminal sets the stored information associated with the first preset information into an invisible mode so as to avoid the case where when the user is compelled to unlock a terminal, the compeller maliciously uses the terminal such that the user's privacy leaks or the user's property is lost, thereby improving security and privacy of the important information stored in the terminal.

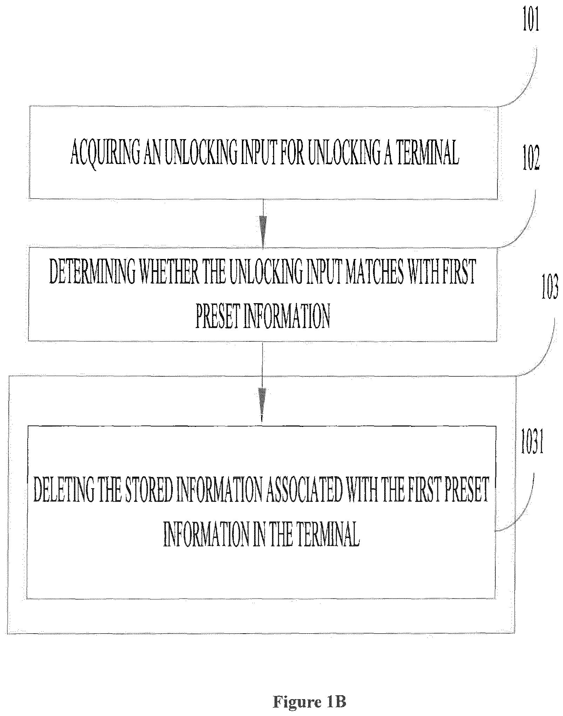

In one embodiment, as shown in Fig. 1B, in block 103, when the unlocking information matches with the first preset information, the stored information associated with the first preset information in the terminal is set into an invisible mode, which can be realized through block 1031.

In block 1031, the stored information associated with the first preset information in the terminal is deleted.

As an example, in order to ensure that the compeller cannot acquire the important information of the user, the terminal can delete the information stored in the terminal and associated with the first preset information when determining the unlocking information input by the user matches with the first preset information so as to prevent the compeller from acquiring the important information of the user through other ways while the compeller uses the terminal. For instance, the stored information may include bank card number/password, social network account number/password and the like.

In the technical solution of the embodiment of the present invention, when the terminal determines that the unlocking information input by the user matches with first preset information, the terminal may delete the stored information associated with the first preset information to avoid the case where when the user is compelled to unlock a terminal, the compeller maliciously uses the terminal such that the user's privacy leaks or the user's property is lost, thereby improving security of the user's information.

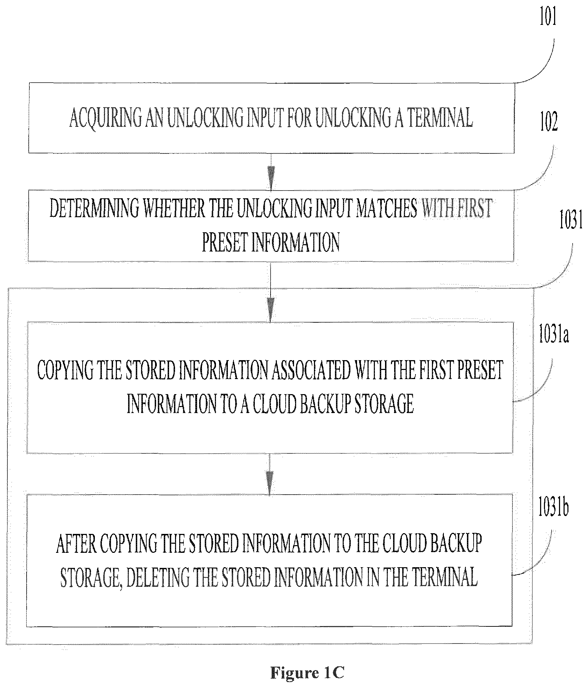

In one embodiment, as shown in Fig. 1C, in block 1031, the stored information associated with the first preset information is deleted, which can be realized by blocks 1031a and 1031b.

In block 1031a, if the unlocking information matches with the first preset information, the stored information associated with the first preset information is copied to a cloud backup storage.

In block 1031b, after the stored information is copied to the cloud backup storage, the stored information in the terminal is deleted.

As an example, when the terminal determines that the user inputs unlocking information which matches with the first preset information, in order to avoid the cases where the stored information associated with the first preset information is directly deleted, and it is hard for the user to get the stored information again, or great loss is caused to the user since some important information is unable to be restored, optionally, when determining that the user inputs unlocking information matched with the first preset information, the terminal can firstly copy the stored information associated with the first preset information to a cloud backup storage, i.e., up-load the stored information associated with the first preset information to a cloud server, then delete the stored information locally saved in the terminal. The cloud server can be a cloud server provided by an operator, or a cloud server provided by a terminal manufacturer, or a server provided by a third party application, and will not be defined here in the embodiment of the present invention. In this way, when the user needs to look up the stored information once again, the user can download from the cloud server and avoid the inconvenience caused to the user by being unable to restore the information.

In the technical solution provided by the the present invention, in order to prevent important information of the user from being unable to be found back, the terminal can firstly copy the stored information to the cloud backup storage before deleting the stored information associated with the first preset information to facilitate the user to reload and use afterwards, thereby improving user experience.

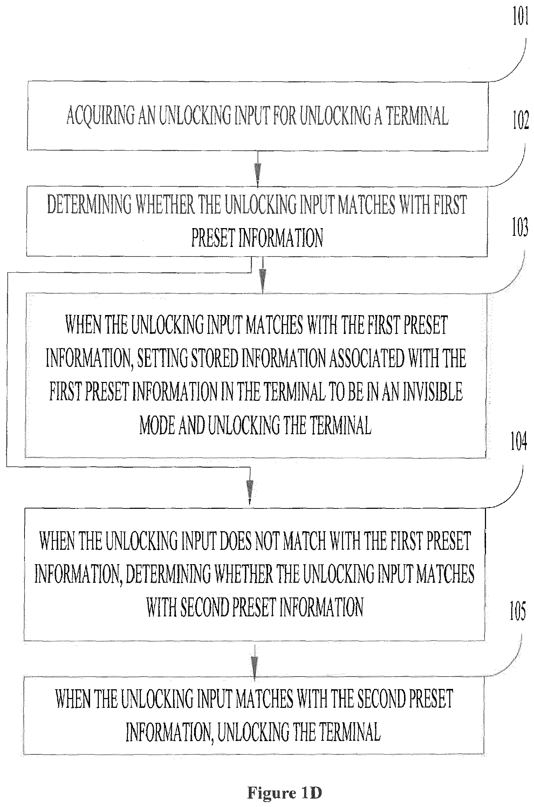

In one embodiment, as shown in Fig. 1D, the method further comprises blocks 104 and 105.

In block 104, when the unlocking information does not match with the first preset information, it is determined whether the unlocking information matches with the second preset information.

In block 105, when the unlocking information matches with the second preset information, the terminal is unlocked.

As an example, when the unlocking information does not match with the first preset information, i.e., what the user inputs is not unlocking information matched with the first preset information, the terminal can further determine if the unlocking information input by the user matches with the second preset information, when the unlocking information matches with the second preset information, the terminal can unlock normally, and this unlocking mode does not delete related preset information. The embodiment supports that the user unlocks in conventional situation (e.g., being not compelled to unlock, or, does not need to hide or delete important information), and unlocks directly when the unlocking information input by the user matches with the second preset information, and normally displays all information pre-stored in the terminal by the user to facilitate the user to use the terminal normally and in a highly-efficient manner. For example, the unlocking mode displayed on the unlocking interface of the terminal is "fingerprint unlocking or drawing patterns"; the user can preset that the unlocking information input correspondingly in the picture-drawing unlocking mode. That is, after the terminal receives correct unlocking information corresponding to the drawing pattern unlocking, the terminal sets the important information associated with the first preset information in the terminal into an invisible mode. Furthermore, it can be preset that the unlocking information input also in the fingerprint unlocking mode matches with the second preset information. That is, after receiving correct fingerprint information, the terminal unlocks normally and will not set the related information in the terminal into the invisible mode.

The specific process of determining whether the unlocking information matches with the second preset information is similar to that of determining whether the unlocking information matches with the first preset information, and will not be described herein.

The above embodiment is also applicable to the technical solutions shown in Figs. 1A and 1C.

In the technical solution provided by the present invention, when the terminal determines that the unlocking information matches with the second preset information, then what the user inputs is unlocking information that normally unlocks the terminal, at this time, the terminal unlocks normally to facilitate the user to use the terminal normally.

In one embodiment, as shown in Fig. IE, in block 102, determining whether the unlocking information matches with the first preset information can be realized in blocks 1021-1023.

In block 1021, a type of the unlocking information is acquired.

In block 1022, it is determined whether the type of the unlocking information is identical with the type of the first preset information.

In block 1023, when the type of the unlocking information is identical with the type of the first preset information, it is determined whether the unlocking information matches with the first preset information.

As an example, after acquiring the unlocking information, the terminal can determine the type of the unlocking information according to the content of the unlocking information. For instance, unlocking information composed of digits and letters indicates that the unlocking information is of password type; when the unlocking information is surface line of an object, it is indicated that the unlocking information is of fingerprint type; when the unlocking information is of user iris feature, it is indicated that the unlocking information is of iris type. It shall be noted that the type of the unlocking information in the present embodiment includes but is not limited to the above password type, fingerprint type and iris type and the like, and any type that can be used in unlocking information is within the protection scope of the present invention.

For example, the type of the first preset information is fingerprint type, after receiving the unlocking information input by the user, the terminal firstly determines if the unlocking information is information of the fingerprint type. For example, the unlocking information is of password type, it can be directly determined that the fingerprint information input by the user does not match with the first preset information and the determination that related information is set into an invisible mode will not be performed.

Since the types of the first preset information and the second present information may be different, the current state of the user can be primarily determined through the type of the unlocking information input by the user. When the type of the unlocking information is different from that of the first preset information, it is indicated that what the user inputs may not be the unlocking information matched with the first preset information, Therefore, the terminal does not need to invoke more computing resources to determine if the unlocking information matches with the first preset information, thereby saving the computing resources of the terminal. If the type of the unlocking information is identical with that of the first preset information, the terminal can further determine if the unlocking information matches with the first preset information, and delete the information associated with the first preset information when a match is determined.

The above embodiment is also applicable to the technical solutions shown in Figs. 1B, 1C and 1D.

In the technical solution provided by the present invention, if the type of the unlocking information is identical with that of the first preset information, the determination as to whether the unlocking information matches with the first preset information is further performed. When the unlocking information matches with the first preset information, the terminal can set the stored information associated with the first preset information into an invisible mode to avoid the case where when the user is compelled to unlock a terminal, the compeller maliciously uses the terminal such that the user's privacy leaks or the user's property is lost, thereby improving security of the user's information.

In one embodiment, as shown in Fig. IF, in block 104, if the unlocking information does not match with the first preset information, it is determined whether the unlock information matches with the second preset information, which can be realized through blocks 1041 and 1042.

In block 1041, it is determined whether the type of the unlocking information is identical with the type of the second preset information.

In block 1042, when the type of the unlocking information is identical with that of the second preset information, it is determined whether the unlocking information matches with the second preset information.

As an example, when the unlocking information does not match with the first preset information, it is indicated that what the user inputs may be unlocking information for normal unlocking and matching with the second preset information. However, directly determining whether the unlocking information matches with the second preset information will invoke more resources, and the terminal can firstly determine if the type of the unlocking information is identical with that of the second preset information. When the type of the unlocking information is different from that of the second preset information, it is indicated that it is impossible that the user inputs unlocking information matching with the second preset information. Therefore, the terminal does not need to invoke more computing resources to determine if the unlocking information matches with the second preset information, thereby saving computing resource of the terminal. When the type of the unlocking information is identical with that of the second preset information, the terminal can further determine if the unlocking information matches with the second preset information, and unlocks the terminal normally when a match is determined.

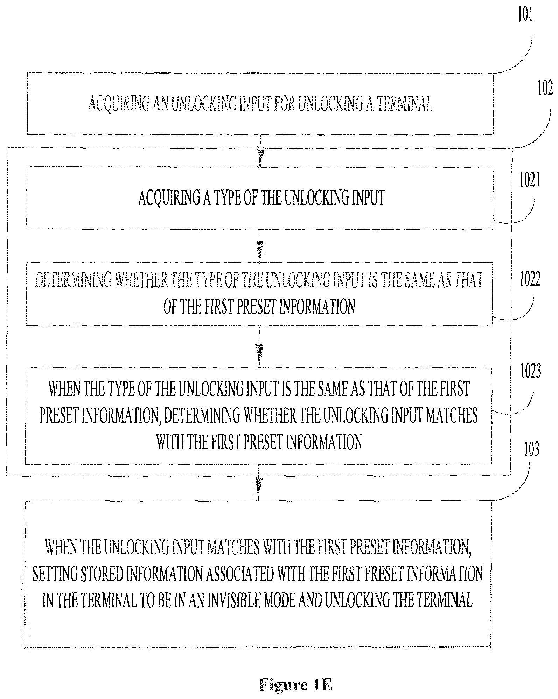

The above embodiment is also applicable to the technical solution shown in Fig. 1E.

In the technical solution provided by the present invention, when the terminal determines that the type of the unlocking information is identical with that of the second preset information, it is indicated that the user may input unlocking information for normal unlocking, and the terminal can further determine if the unlocking information matches with the second preset information, and when the unlocking information matches with the second preset information, the terminal unlocks normally to facilitate the user to use the terminal normally.

The realization process will be introduced in detail through several embodiments as below.

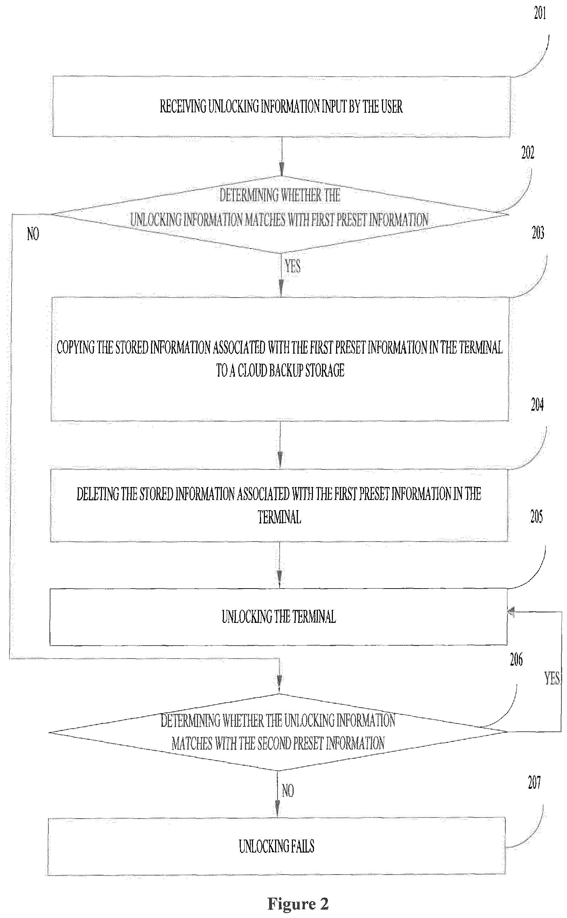

Fig. 2 is a flow chart of an information protection method according to yet another aspect of the present invention. The method may be applied in a terminal. As shown in Fig. 2, the method includes the following blocks 201-207.

In block 201, unlocking information input by a user is received.

In block 202, it is determined whether the unlocking information matches with first preset information; when the unlocking information matches with the first preset information, block 203 is executed; when the unlocking information does not match with the first preset information, block 206 is executed.

In block 203, the stored information associated with the first preset information in the terminal is copied to a cloud backup storage.

In block 204, the stored information associated with the first preset information in the terminal is deleted.

In block 205, the terminal is unlocked, and the flow ends.

In block 206, it is determined whether the unlocking information matches with second preset information; when the unlocking information matches with the second preset information, block 205 is executed; when the unlocking information does not match with the second preset information, block 207 is executed.

In block 207, unlocking fails.

The aspect of the present invention provides an information protection method. When the terminal determines that the unlocking information input by a user matches with first preset information, stored information associated with the first preset information may be set to be in an invisible mode. The present invention effectively avoids the case where when the user is compelled to unlock a terminal, the compeller maliciously uses the terminal such that the user's privacy leaks or the user's property is lost, thereby improving security of the user's information.

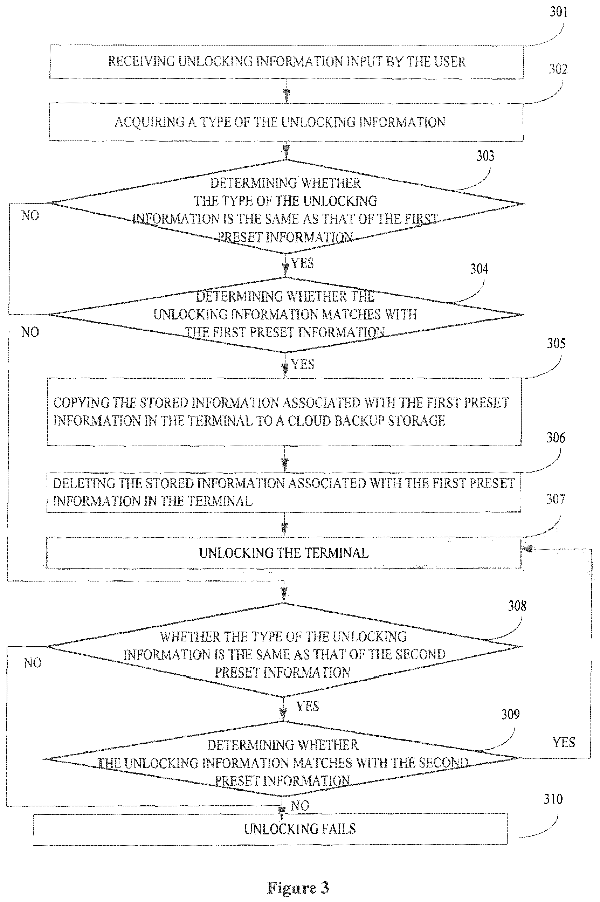

Fig. 3 is a flow chart of an information protection method according to yet another aspect of the present invention. The method may be applied in a terminal. As shown in Fig. 3, the method includes the following blocks 301-310.

In block 301, unlocking information input by a user is received.

In block 302, a type of the unlocking information is acquired.

In block 303, it is determined whether the type of the unlocking information is the same as that of the first preset information; when the type of the unlocking information is the same as that of the first preset information, block 304 is executed; when the type of the unlocking information is not the same as that of the first preset information, block 308 is executed.

In block 304, it is determined whether the unlocking information matches with first preset information; when the unlocking information matches with the first preset information, block 305 is executed; when the unlocking information does not match with the first preset information, block 308 is executed.

In block 305, the stored information associated with the first preset information in the terminal is copied to a cloud backup storage.

In block 306, the stored information associated with the first preset information in the terminal is deleted.

In block 307, the terminal is unlocked, and the flow ends.

In block 308, it is determined whether the type of the unlocking information is the same as that of second preset information; when the type of the unlocking information is the same as that of the second preset information, block 309 is executed; when the type of the unlocking information is not the same as that of the second preset information, block 310 is executed.

In block 309, it is determined whether the unlocking information matches with the second preset information; when the unlocking information matches with the second preset information, block 307 is executed; when the unlocking information does not match with the second preset information, block 310 is executed.

In block 310, unlocking fails.

The aspect of the present invention provides an information protection method. When the terminal determines that the unlocking information input by a user matches with first preset information, stored information associated with the first preset information may be set to be in an invisible mode. The present invention effectively avoids the case where when the user is compelled to unlock a terminal, the compeller maliciously uses the terminal such that the user's privacy leaks or the user's property is lost, thereby improving security of the user's information.

The followings are apparatus embodiments of the present invention, which may be used to perform the method embodiments of the present invention.

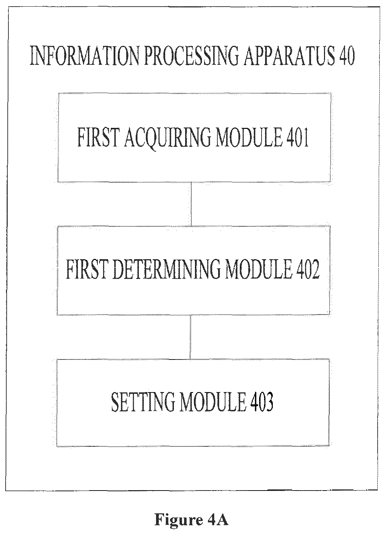

Fig. 4A is a schematic structural diagram of an information protection apparatus 40 according to an aspect of the present invention. The apparatus 40 may be implemented by software, hardware or a combination of the both into a part or all of an electronic device. As shown in Fig. 4A, the information protection apparatus 40 include a first acquiring module 401, a first determining module 402 and a setting module 403.

The first acquiring module 401 is configured to acquire unlocking information for unlocking a terminal.

The first determining module 402 is configured to determine whether the unlocking information matches with first preset information.

The setting module 403 is configured to, when the unlocking information matches with the first preset information, set stored information associated with the first preset information in the terminal to be in an invisible mode and unlock the terminal

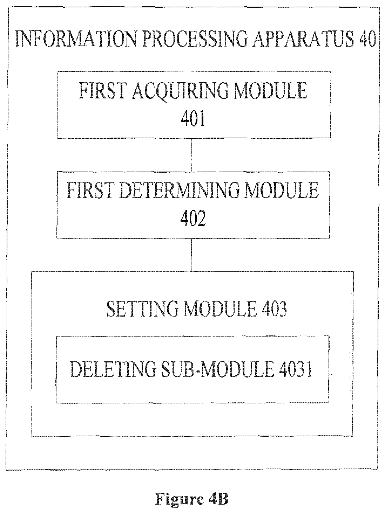

In an embodiment, as shown in Fig. 4B, the setting module 403 comprises a deleting sub-module 4031.

The deleting sub-module 4031 is configured to delete the stored information associated with the first preset information in the terminal.

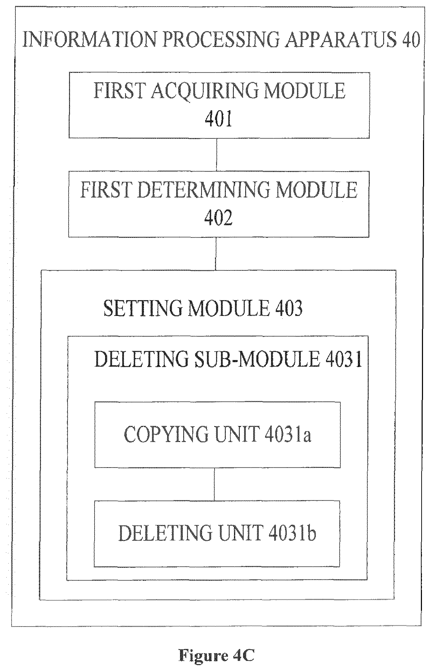

In another embodiment, as shown in Fig. 4C, the deleting sub-module 4031 comprises: a copying unit 4031a and a deleting unit 4031b.

The copying unit 4031a is configured to copy the stored information associated with the first preset information to a cloud backup storage.

The deleting unit 4031b is configured to, after copying the stored information to the cloud backup storage, delete the stored information in the terminal.

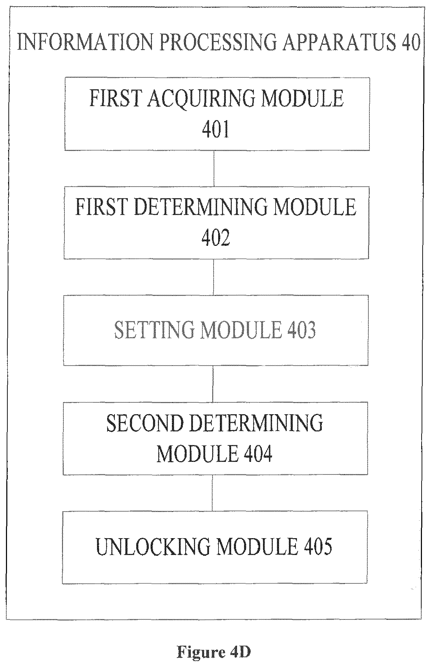

In yet another embodiment, as shown in Fig. 4D, the apparatus 40 further comprises: a second determining module 404 and an unlocking module 405.

The second determining module 404 is configured to, when the unlocking information does not match with the first preset information, determine whether the unlocking information matches with second preset information.

The unlocking module 405 is configured to, when the unlocking information matches with the second preset information, unlock the terminal

The above embodiment is also applicable to the information protection apparatuses 40 shown in Figs. 4B and 4C.

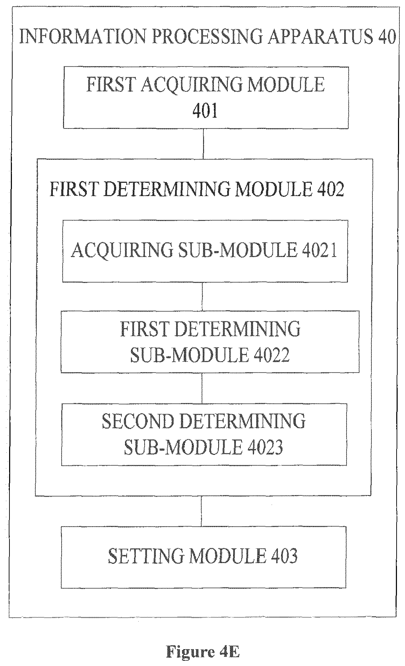

In yet another embodiment, as shown in Fig. 4E, the first determining module 402 comprises: an acquiring sub-module 4021, a first determining sub-module 4022 and a second determining sub-module 4023.

The acquiring sub-module 4021 is configured to acquire a type of the unlocking information.

The first determining sub-module 4022 is configured to determine whether the type of the unlocking information is the same as that of the first preset information.

The second determining sub-module 4023 is configured to, when the type of the unlocking information is the same as that of the first preset information, determine whether the unlocking information matches with the first preset information.

The above embodiment is also applicable to the information protection apparatuses 40 shown in Figs. 4B, 4C and 4D.

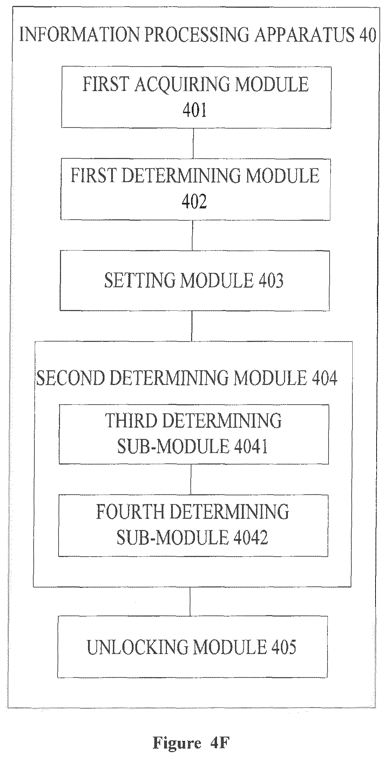

In yet another embodiment, as shown in Fig. 4F, the second determining module 404 includes a third determining sub-module 4041 and a fourth determining sub-module 4042.

The third determining sub-module 4041 is configured to determine whether a type of the unlocking information is the same as that of the second preset information.

The fourth determining sub-module 4042 is configured to, when the type of the unlocking information is the same as that of the second preset information, determine whether the unlocking information matches with the second preset information.

The above embodiment is also applicable to the information protection apparatus 40 shown in Fig. 4E.

The aspect of the present invention provides an information protection apparatus. When the terminal determines that the unlocking information input by a user matches with first preset information, stored information associated with the first preset information may be set to be in an invisible mode. The present invention effectively avoids the case where when the user is compelled to unlock a terminal, the compeller maliciously uses the terminal such that the user's privacy leaks or the user's property is lost, thereby improving security of the user's information.

An aspect of the present invention provides an information protection apparatus. The apparatus comprises: a processor, and a memory configured for storing instructions executable by the processor, wherein the processor is configured for: acquiring unlocking information for unlocking a terminal; determining whether the unlocking information matches with first preset information; if the unlocking information matches with the first preset information, setting stored information associated with the first preset information in the terminal to be in an invisible mode and unlocking the terminal.

The aspect of the present invention provides an information protection apparatus. When the terminal determines that the unlocking information input by a user matches with first preset information, stored information associated with the first preset information may be set to be in an invisible mode. The present invention effectively avoids the case where when the user is compelled to unlock a terminal, the compeller maliciously uses the terminal such that the user's privacy leaks or the user's property is lost, thereby improving security of the user's information.

Regarding the apparatuses in the above embodiments, the specific operation manners performed by the respective modules have been described in detail in the method embodiments, and will not be elaborated herein.

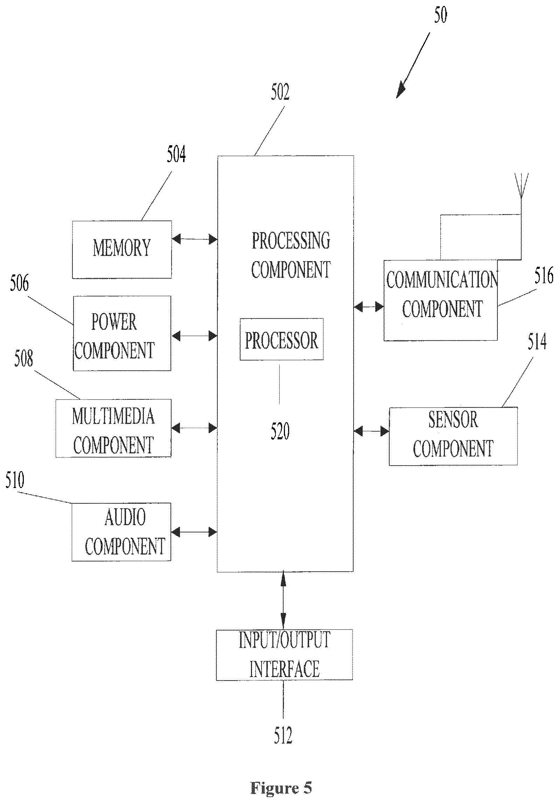

Fig. 5 is a structural block diagram of an information protection apparatus 50 according to an exemplary embodiment. The apparatus may be applied to a terminal device. For example, the apparatus 50 may be a mobile phone, a computer, a digital broadcast terminal, a messaging device, a gaming console, a tablet, a medical device, exercise equipment, a personal digital assistant or the like.

The apparatus 50 may comprise one or more following components: a processing component 502, a memory 504, a power component 506, a multimedia component 508, an audio component 510, an input/output (I/O) interface 512, a sensor component 514 and a communication component 516.

The processing component 502 typically controls overall operations of the apparatus 50, such as the operations associated with display, data communications, multimedia operations and recording operations. The processing component 502 may include one or more processors 520 to execute instructions to perform all or part of the blocks in the above described methods. Moreover, the processing component 502 may include one or more modules which facilitate the interaction between the processing component 502 and other components. For example, the processing component 502 may comprise a multimedia module to facilitate the interaction between the multimedia component 508 and the processing component 502.

The memory 504 is configured to store various types of data to support the operation of the apparatus 50. Examples of such data comprise instructions for any applications or methods operated on the apparatus 50, various kinds of data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 50. The power component 506 may comprise a power management system, one or more power sources, and any other components associated with the generation, management, and distribution of power in the apparatus 50.

The multimedia component 508 comprises a screen providing an output interface between the apparatus 50 and the user. In some embodiments, the screen may comprise a liquid crystal display (LCD) and a touch panel (TP). When the screen comprises the touch panel, the screen may be implemented as a touch screen to receive input signals from the user. The touch panel comprises one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and the rear camera may receive an external multimedia datum while the apparatus 50 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 50 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include but are not limited to a home button, a sound volume button, a start button and a locking button.

The sensor component 514 comprises one or more sensors to provide status assessments of various aspects of the apparatus 50. For instance, the sensor component 514 may detect an open/closed status of the apparatus 50, relative positioning of components, e.g., the display and the keypad, of the apparatus 50, a change in position of the apparatus 50 or a component of the apparatus 50, presence or absence of user's contact with the apparatus 50, an orientation or an acceleration/deceleration of the apparatus 50, and a change in temperature of the apparatus 50. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the apparatus 50 and other devices. The apparatus 50 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 50 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium comprising instructions, such as comprised in the memory 504, executable by the processor 520 in the apparatus 50, for performing the above-described methods. For example, the non-transitory computer-readable storage medium may be a ROM, a RAM, a CD-ROM, a magnetic tape, a floppy disc, an optical data storage device, and the like.

An aspect of the present invention provides a non-transitory computer-readable storage medium that stores executable instructions that, when executed by the processor of the apparatus 50, cause the apparatus 50 to execute the above information protection method. The method comprises: acquiring unlocking information for unlocking a terminal; determining whether the unlocking information matches with first preset information; when the unlocking information matches with the first preset information, setting stored information associated with the first preset information in the terminal to be in an invisible mode and unlocking the terminal.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for protecting information, comprising:
acquiring (101) an unlocking input for unlocking a terminal;
determining (102) whether the unlocking input matches with first preset information; and
when the unlocking input matches with the first preset information, setting (103) stored information associated with the first preset information in the terminal to be in an invisible mode and unlocking the terminal.

2. The method of claim 1, wherein setting (103) the stored information associated with the first preset information in the terminal to be in the invisible mode comprises: deleting (1031) the stored information associated with the first preset information in the terminal.

3. The method of claim 2, wherein deleting (1031) the stored information associated with the first preset information in the terminal comprises:
copying (1031a) the stored information associated with the first preset information to a cloud backup storage; and
after copying the stored information to the cloud backup storage, deleting (1031b) the stored information in the terminal.

4. The method of any of claims 1-3, further comprising:
when the unlocking input does not match with the first preset information, determining (104) whether the unlocking input matches with second preset information;
when the unlocking input matches with the second preset information, unlocking (105) the terminal.

5. The method of any of claims 1-4, wherein determining (102) whether the unlocking input matches with the first preset information comprises:
acquiring (1021) a type of the unlocking input;
determining (1022) whether the type of the unlocking input is the same as that of the first preset information; and
when the type of the unlocking input is the same as that of the first preset information, determining (1023) whether the unlocking input matches with the first preset information.

6. The method of claim 4, wherein determining (104) whether the unlocking input matches with the second preset information comprises:
determining (1041) whether a type of the unlocking input is the same as that of the second preset information; and
when the type of the unlocking input is the same as that of the second preset information, determining (1042) whether the unlocking input matches with the second preset information.

7. An apparatus for protecting information, comprising:
a first acquiring module (401) configured to acquire an unlocking input for unlocking a terminal;
a first determining module (402) configured to determine whether the unlocking input matches with first preset information; and
a setting module (403) configured to, when the unlocking input matches with the first preset information, set stored information associated with the first preset information in the terminal to be in an invisible mode and unlock the terminal.

8. The apparatus according to claim 7, wherein the setting module (403) comprises: a deleting sub-module (4031) configured to, delete the stored information associated with the first preset information in the terminal.

9. The apparatus according to claim 8, wherein the deleting sub-module (4031) comprises:
a copying unit (4031a) configured to, copy the stored information associated with the first preset information to a cloud backup storage; and
a deleting unit (4031b) configured to, after copying the stored information to the cloud backup storage, delete the stored information in the terminal.

10. The apparatus according to any of claims 7-9, further comprising:
a second determining module (404) configured to, when the unlocking input does not match with the first preset information, determine whether the unlocking input matches with second preset information; and
an unlocking module (405) configured to, when the unlocking input matches with the second preset information, unlock the terminal.

11. The apparatus according to any of claims 7-10, wherein the first determining module (402) comprises:
an acquiring sub-module (4021) configured to acquire a type of the unlocking input;
a first determining sub-module (4022) configured to determine whether the type of the unlocking input is the same as that of the first preset information; and
a second determining sub-module (4023) configured to, when the type of the unlocking input is the same as that of the first preset information, determine whether the unlocking input matches with the first preset information.

12. The apparatus according to claim 10, wherein the second determining module (404) comprises:
a third determining sub-module (4041) configured to, determine whether a type of the unlocking input is the same as that of the second preset information; and
a fourth determining sub-module (4042) configured to, when the type of the unlocking input is the same as that of the second preset information, determine whether the unlocking input matches with the second preset information.

13. An apparatus for protecting information, comprising: a processor (520), and a memory (504) configured to store instructions executable by the processor (520), wherein the processor (520) is configured to perform the method for protecting information according to any of claims 1 to 6.

14. A computer program including instructions for executing the steps of the method for protecting information according to any of claims 1 to 6 when said program is executed by a computer.

15. A recording medium readable by a computer and having recorded thereon a computer program including instructions for executing the steps of the method for protecting information according to any of claims 1 to 6.
